# EUROPEAN PATENT SPECIFICATION

(11) **EP 3 995 729 B1**
(45) Date of publication and mention of the grant of the patent: **30.08.2023**
(21) Application number: 21206232.7
(22) Date of filing: 03.11.2021
(51) Int. Cl.: F16L 33/12, G01N 3/12, G01M 3/32

(54) **SUPPORT AND CONNECTION STRUCTURE FOR A TANK AND HYDROSTATIC ACCEPTANCE SYSTEM**
STÜTZ- UND VERBINDUNGSSTRUKTUR FÜR EINEN TANK UND HYDROSTATISCHES ANNAHMESYSTEM
STRUCTURE DE SUPPORT ET DE RACCORDEMENT POUR UN RÉSERVOIR ET SYSTÈME D'ACCEPTATION HYDROSTATIQUE

(30) Priority: 09.11.2020 IT 202000026717
(43) Date of publication of application: 11.05.2022
(73) Proprietor: Aumatech S.r.l., 66050 San Salvo, (CH) (IT)
(72) Inventor: MONACO, Marco, 66050 San Salvo, Chieti (IT)
(74) Representative: Chimini, Francesco

(56) References cited:
- WO-A1-2007/010720
- CN-A- 108 106 796
- US-A- 4 667 506
- US-B1- 9 146 184

## Description

This invention is in the field of hydrostatic acceptance testing of a tank, such as pressure leak tests of a recipient, a cylinder, a vessel, or a container; in particular, a support and connection structure suitable to support a tank during hydrostatic acceptance testing and a hydrostatic acceptance system is the subject of this invention.

As is known, the acceptance tests performed according to the state of the art provide for a tank to be housed within an outer sealing frame, whereby a gap is created between the tank and the frame. The pressure leak test is performed by pumping a test fluid, for example water, both into the gap and inside the tank. In particular, the pressure of the test fluid inside the tank is about 1050 bar, while in the gap the test fluid is at atmospheric pressure, i.e., about 1 bar.

Operationally, following pressurization of the test fluid inside the tank, a portion of the test fluid contained in the gap escapes from the outer sealing frame through a discharge opening. In particular, the amount of test fluid that initially escapes from the frame, i.e., immediately after pressurizing the test fluid, is proportional to the elastic deformation. After holding the tank under pressure for a predefined test time, the tank is depressurized, and the test fluid is discharged. The tank recovers the elastic deformation that had caused the initial discharge of the test fluid, and the permanent plastic deformation remains.

The deformation that the tank undergoes during the hydrostatic acceptance test is measured by means of at least one deformation measuring device, such as a graduated cylinder or an expansion cylinder. This measuring device is operationally connected to the outer wall of the outer sealing frame in such a way as to detect the deformation of the tank during the acceptance test. By filtering out the measured deformation value from the elastic deformation, the residual, i.e. permanent, plastic deformation value is obtained.

Disadvantageously, the state of the art provides for the connection between the tank and a test fluid feed line being obtained by means of sealing joints to be screwed to both the tank and the feed line. It will appear obvious to the person skilled in the art that the preparation of the hydrostatic acceptance test requires time and particular attention in order to avoid leaks that could distort the test result. Prior art documents relevant to the invention are patent documents WO 2007/010720 A1, CN 108 106 796 A, US 4 667 506 A, and US 9 146 184 B1.

The object of this invention is to propose a support and connection structure for supporting a tank and a hydrostatic acceptance testing system capable of resolving at least in part the drawbacks mentioned above in connection with the prior art.

Said object is achieved with a support and connection structure according to claim 1 and a hydrostatic acceptance system according to claim 13. The dependent claims describe preferred embodiments of the invention.

The features and advantages of the support and connection structure and the hydrostatic acceptance system according to the invention will become apparent from the description below of its preferred embodiments, given by way of non-limiting example, with reference to the accompanying figures, wherein:

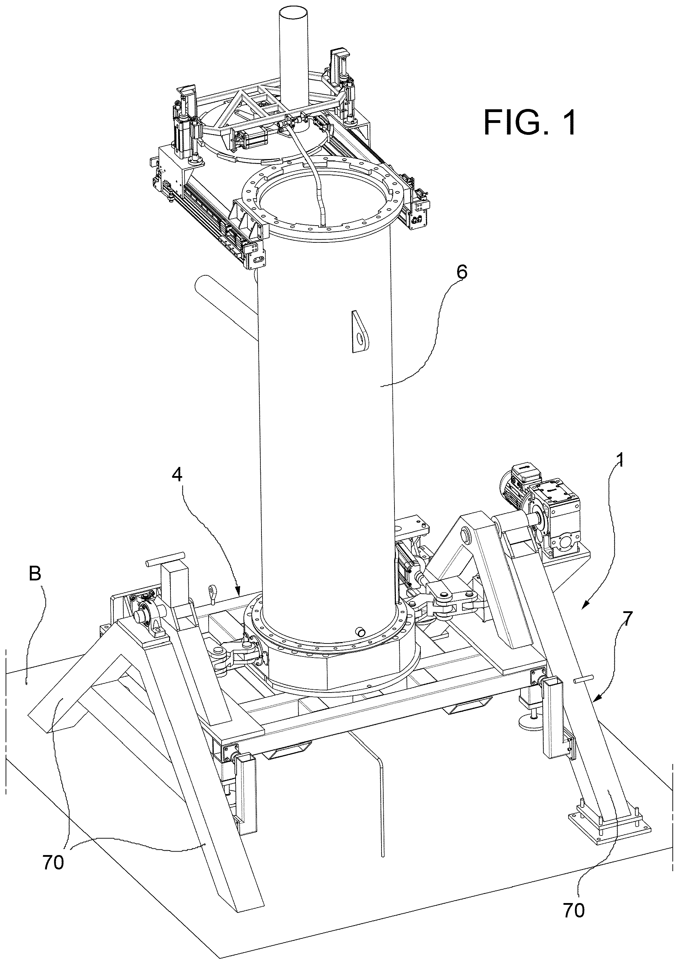

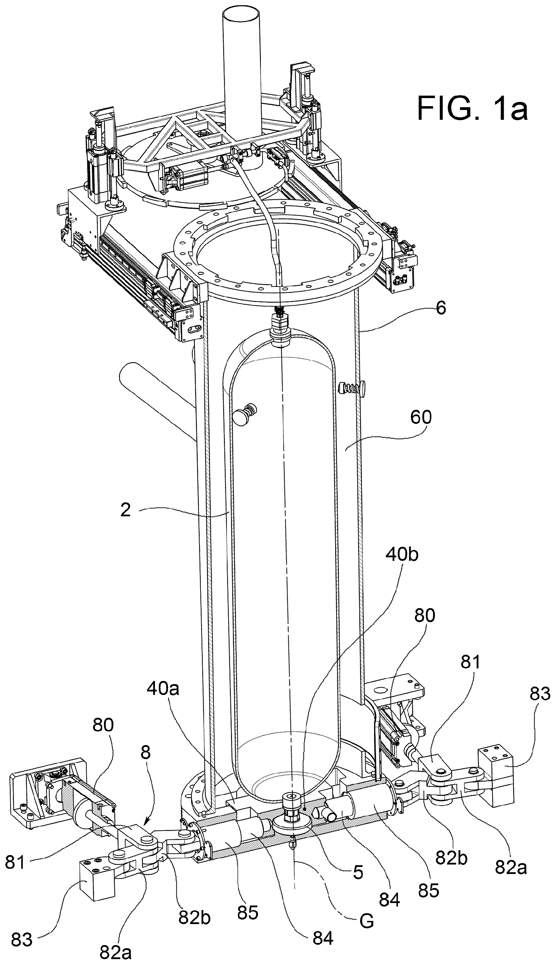

- Fig. 1 is a perspective view of a hydrostatic acceptance system in one embodiment;
- Fig. 1a is an axial cross section of the hydrostatic acceptance system in Fig. 1;
- Fig. 2 is a cross-sectional perspective view of a lower portion of the hydrostatic acceptance system in Fig. 1;
- Fig. 3 is a top view of a support and connection structure;

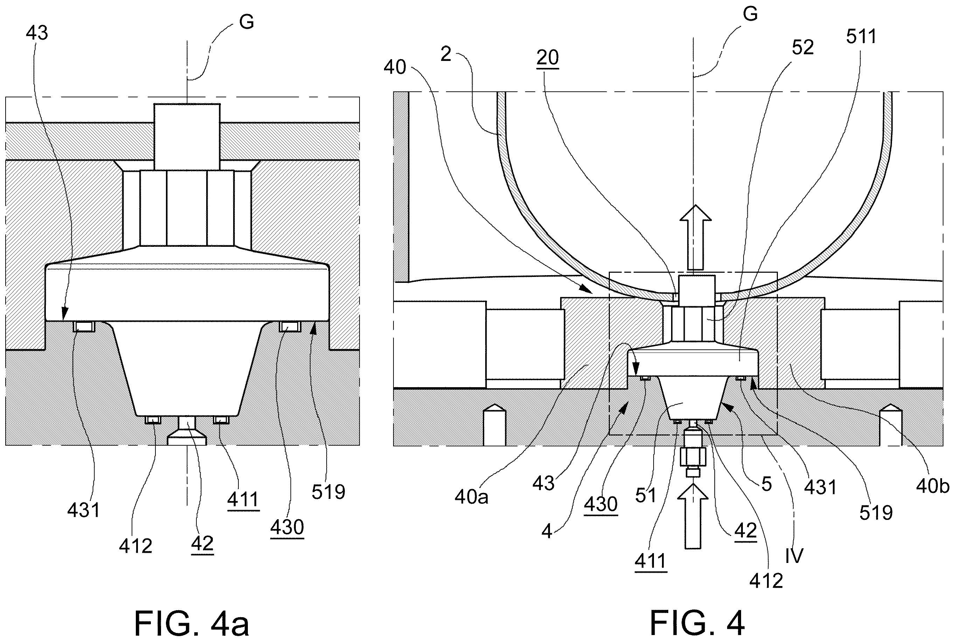

- Fig. 4 is a cross-sectional side view of the lower portion of the hydrostatic acceptance system;
- Fig. 4a is an enlarged, detailed view of the box IV in Fig. 4;

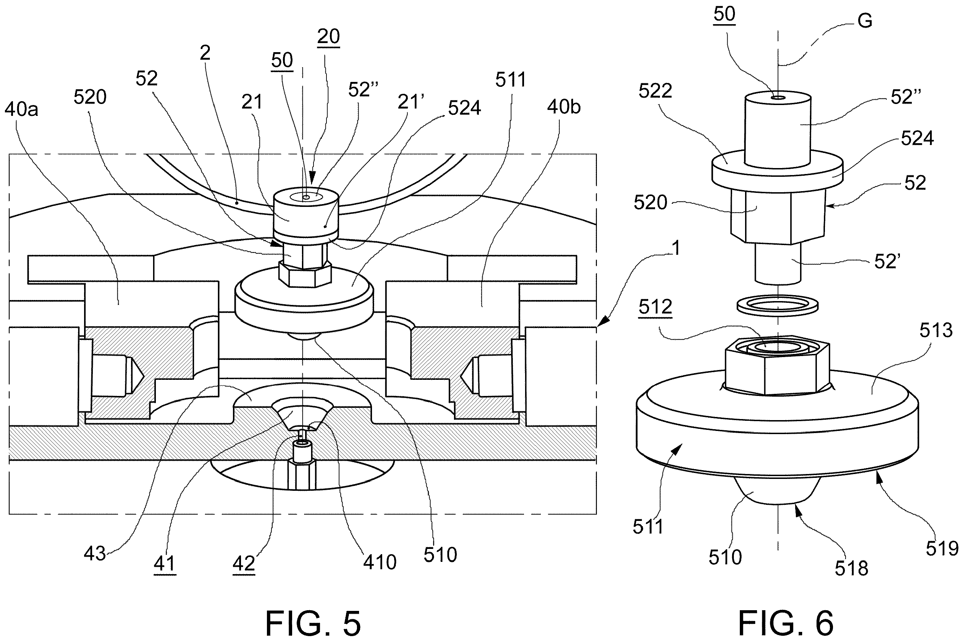

- Fig. 5 is a perspective view in separate components of the support and connection structure;
- Fig. 6 is a perspective view in separate components of a sealing joint in an embodiment;

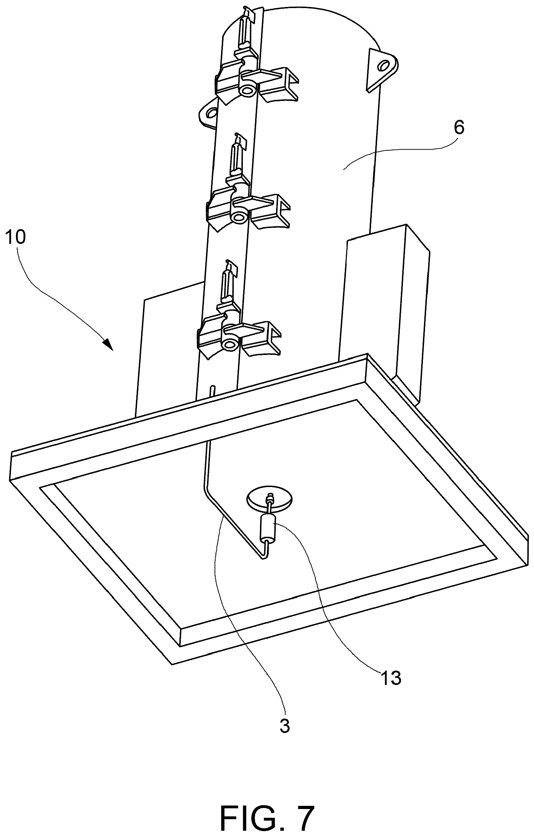

- Fig. 7 is a perspective view from below of the hydrostatic acceptance system in a further embodiment;
- Fig. 8 is a cross-sectional side view of the sealing joint;
- Fig. 8a is a cross-sectional side view of the sealing joint in a further embodiment, and

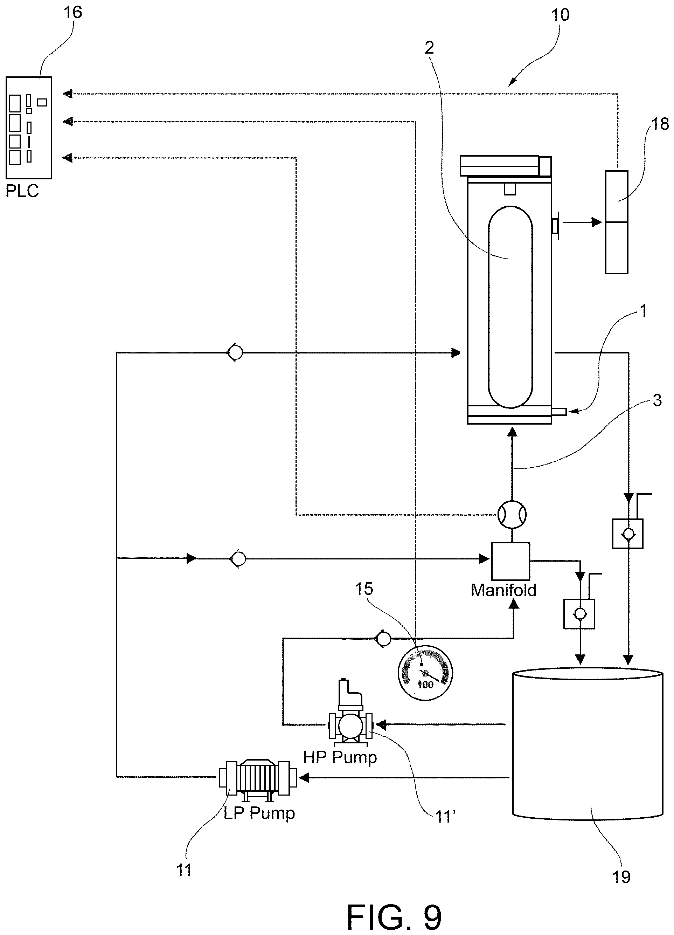

- Fig. 9 is a general diagram of the hydrostatic acceptance system.

In the following description, elements common to the various embodiments represented in the drawings are indicated with the same reference numerals.

In said drawings, a support and connection structure has been indicated with 1 and a hydrostatic acceptance system according to the invention has been indicated as a whole with 10.

In a general embodiment, the support and connection structure 1 is suitable to support a tank 2 during a hydrostatic acceptance test and is suitable to connect said tank with a feed line 3 of a test fluid, such as water. The support and connection structure 1 comprises a support and housing base 4 for the tank 2 and a sealing joint 5.

The sealing joint 5 has an axial extension along an axis G and a circumferential extension perpendicular to said axis G. Said sealing joint 5 is configured to connect the support and housing base 4 with the tank 2. A feeding conduit 50 axially passing through is obtained in said sealing joint 5 for the fluidic connection between the feed line 3 and the inside of the tank.

The support and housing base 4 comprises a clamp 40 formed of at least one pair of jaws 40a, 40b configured to move from a disengagement position to a support position of the sealing joint 5 along the circumferential extension and of the tank 2 along the axis G. Further, a joint housing seat 41 and a connecting pipe 42 for connecting the feed line 3 with the feeding conduit 50 are formed in the support and housing base 4.

The sealing joint 5 comprises a connecting nipple 52 and a base engagement element 51 sealingly engageable with the support and housing base 4.

The base engagement element 51 comprises a centering portion 510 and a head 511 that surmounts said centering portion 510 in axial succession. The centering portion 510 is engageable in the joint housing seat 41 with shape and/or force coupling. The head 511 has a greater circumferential volume than the one of the centering portion 510, and a nipple engagement hole 512 configured to engage the connecting nipple 52 is also obtained in the head.

The connecting nipple 52 extends between a first end 52' engageable in the nipple engagement hole 512, and a second end 52" at least partially threaded externally so it is engageable in a respective threaded hole 20 obtained in the tank 2.

In one embodiment, the first end 52' is engageable with shape and/or force coupling in the nipple engagement hole 512. In particular, said first end 52' is at least partially threaded so as to screw into the nipple engagement hole 512, which is in turn internally threaded.

According to an embodiment of the invention, the feeding conduit 50 is coaxial to the axis G. Optionally, the connecting pipe 42 is also coaxial to the axis G. When the feeding conduit 50 is aligned with the connecting pipe 42, and they in turn are aligned with the axis G, the support and connection structure 1 is axially symmetrical with respect to said axis G. In other words, the support and connection structure 1 is axial-symmetrical.

According to an embodiment, the centering portion 510 is frustoconically-shaped along said axis G away from the tank, and the joint housing seat 41 is counter-shaped with respect to said centering portion. In other words, the centering portion 510 is an inverted frustoconical shape.

In an embodiment, an overhead surface 513 of the head 511 has a tapered shape converging towards the axis G so that the overhead surface 513 forms, with an imaginary plane I orthogonal to the axis G, a convex angle α with an amplitude between 2 and 15 sexagesimal degrees. Preferably, the amplitude of the convex angle α is between 3° and 10°. Even more preferably, the amplitude of the convex angle α is exactly 5°.

In particular, the overhead surface 513 is the top surface of the head 511 and the imaginary plane I is a generic plane that cuts the head 511 orthogonally to the axis.

For the purposes of this discussion, the terms "upper," "lower," and their respective derivatives are intended to refer to the support and connection structure in the acceptance testing configuration, i.e., resting on a base plane B by means of a support frame 7 possibly provided with four legs 70.

Similarly, the term "proximal" and respective derivatives identify an element that is closer, i.e. nearer, to the base plane B with respect to another element. Conversely, the term "distal" and respective derivatives identify an element that is more distant, i.e. further away, from the base plane B with respect to another element.

According to an embodiment, the head 511 is a disk with a transverse diameter D1 greater than a maximum diameter D2 of the centering portion 510. The transverse diameter D1 and the maximum diameter D2 are measured orthogonally to the axis G.

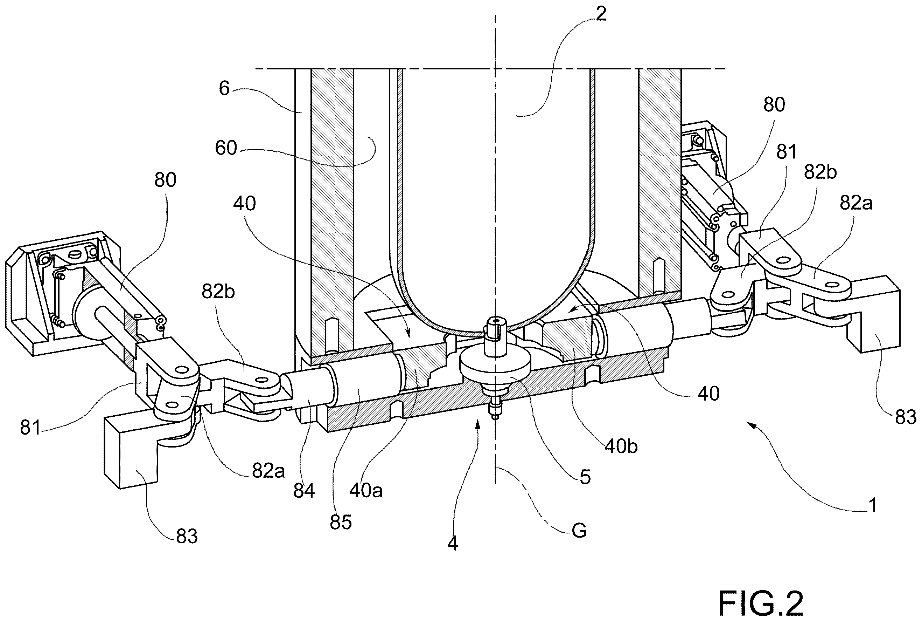

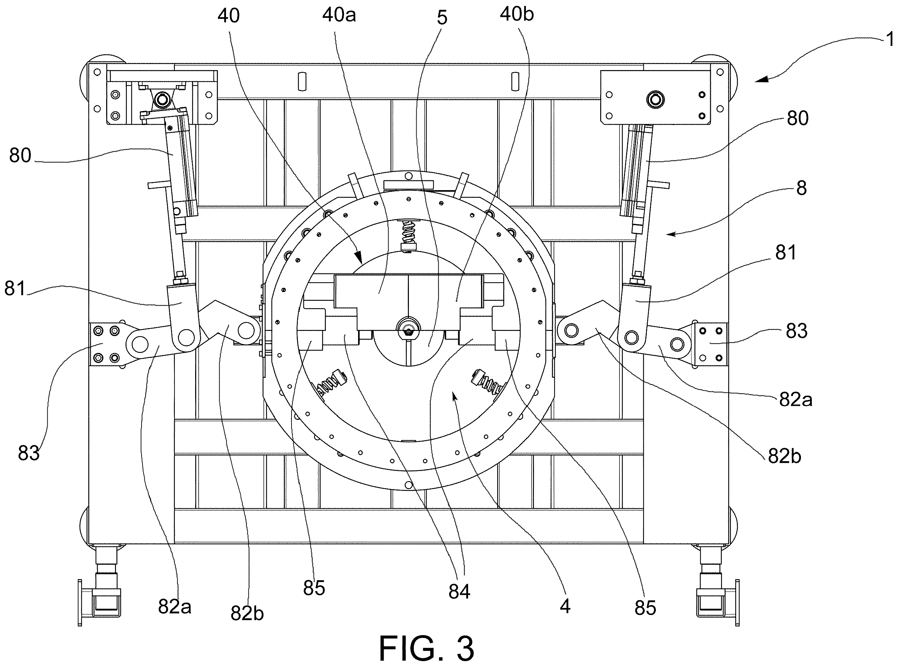

In an embodiment, the clamp 40 is operated by means of a toggle lever linkage 8 comprising at least one pair of cylinders 80, wherein each cylinder of said pair of cylinders 80 moves a bracket 81, at the free end of which a pair of connecting rods 82a, 82b are hinged. A first connecting rod 82a of said pair of connecting rods is rotationally fastened to a rigid support 83 at the end opposite the end hinged to the bracket 81. A second connecting rod 82b of said pair of connecting rods is rotationally fastened, at an end opposite to the end hinged to the bracket 81, to a strut 84 which pushes on a respective jaw 40a; 40b, so as to cause the transverse locking of the sealing joint 5. The strut 84 is constrained to slide within a sleeve 85 so as to perform a rectilinear translation movement. The second connecting rod 82b is formed of two arms inclined to each other so as to form a convex second connecting rod angle between 90 and 180 sexagesimal degrees. In the attached Fig. 2, the toggle lever linkage 8 is seen in the disengaged position with the jaws 40a, 40b open. Conversely, in Fig. 3, the toggle lever linkage 8 may be seen in the support position with the jaws 40a, 40b closed.

According to an embodiment, the base engagement element 51 further comprises a collar 514 projecting from the head 511 in the opposite direction from the centering portion 510 and parallel to the axis G. In the collar 514, the nipple engagement hole 512 is at least partially formed. In other words, the nipple engagement hole 512 may surpass the axial extension of the collar 514 and involve a portion of the head 511.

According to an embodiment, an intermediate gripping portion 520 is formed between the first end 52' and the second end 52" for handling the connecting nipple 52 and/or the sealing joint 5. In other words, the handling of the sealing joint 5 by means of the intermediate gripping portion 520 occurs when the base engagement element 51 and the connecting nipple 52 are assembled together, i.e. engaged and made integral with each other.

In particular, the intermediate gripping portion 520 is suitable to be grasped with a tool for screwing the connecting nipple 52 into the nipple engagement hole 512 and/or the threaded hole 20 of the tank. For example, the intermediate gripping portion 520 has a side surface with a hexagonal cross section for grasping with a mechanical wrench or an adjustable wrench.

Operationally, the connecting nipple 52 is engaged in the nipple engagement hole 512 and made integral with the base engagement element 51, so as to obtain the assembled sealing joint 5. After assembling the sealing joint 5, it is screwed into the threaded hole 20 of the tank 2.

In an embodiment, a groove 516 suitable to accommodate a first fluid-tight element 517, such as a washer, is formed in an upper collar surface 515 of the collar 514. Said first fluid-tight element 517 is axially compressed within the groove 516 by the intermediate gripping portion 520 when the first end 52' engages the nipple engagement hole 512. Specifically, the upper collar surface 515 is orthogonal to the axis G and distal to the head 511.

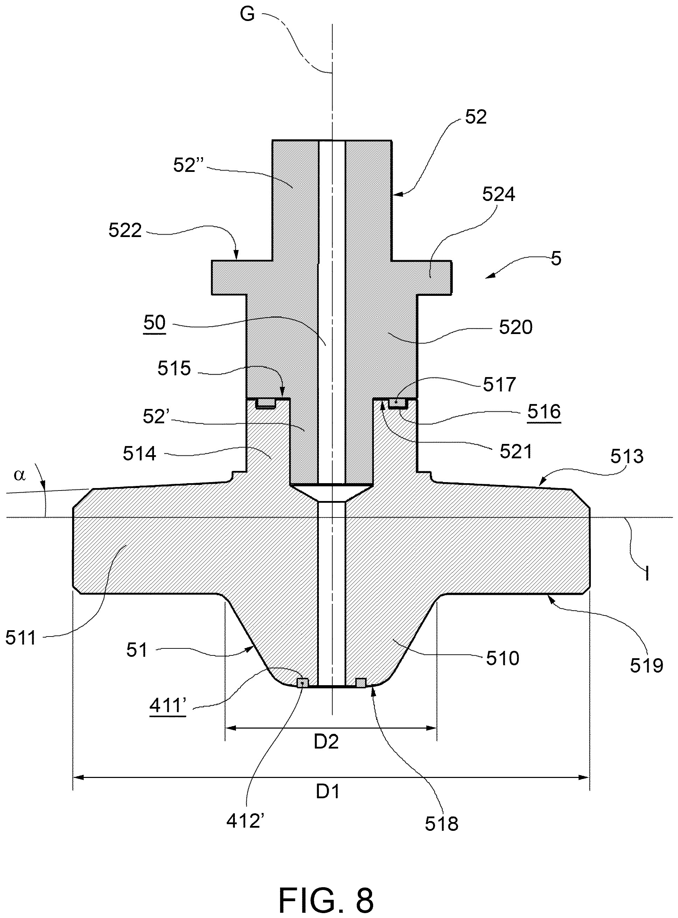

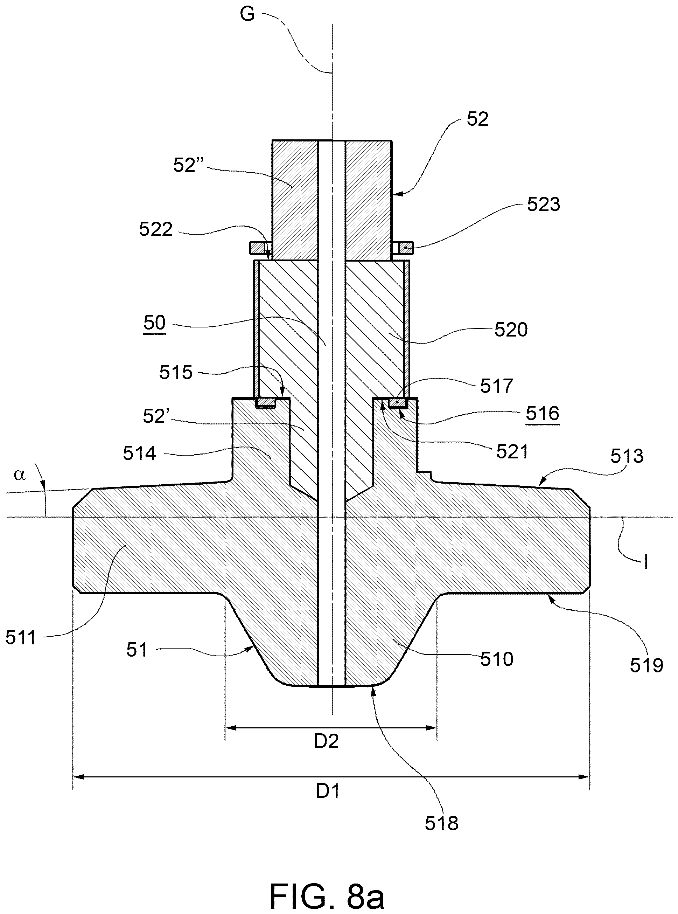

According to an embodiment, the intermediate gripping portion 520 has a transverse width greater than that of the first and second ends 52', 52'', so as to form a lower shoulder 521 and an upper shoulder 522. A second fluid-tight element 523 is positioned on the upper shoulder 522 suitable to be interposed between the upper shoulder 522 and the tank 2 to prevent leakage of the test fluid from the tank during the hydrostatic acceptance test. In other words, during the hydrostatic acceptance test, the tank 2 is operationally connected to the support and connection structure 1 so that the upper shoulder 522 is suitable to face the tank 2 with the interposition of the second fluid-tight element 523 (Fig. 8a).

According to the embodiment of Fig. 8, the intermediate gripping portion 520 is delimited above by a radially outwardly projecting annular prominence 524. Said annular prominence 524 forms the upper shoulder 522 suitable for abutting with a lower end 21' of a hole wall 21 of the threaded hole 20 of the tank 2.

According to an embodiment, the joint housing seat 41 is delimited below by a bottom wall 410 wherein a first sealing seat 411 is formed where a first fluid-tight gasket 412, e.g. an O-ring, is removably housed to form a seal between the centering portion 510 and the joint housing seat 41.

According to an embodiment, a connecting pipe 42 is formed in the bottom wall 410.

In an embodiment shown in Fig. 8, the centering portion 510 is delimited at the bottom by a base 518 wherein a first sealing seat 411' is formed where a first fluid-tight gasket 412', e.g. an O-ring, is removably housed to form a seal between the centering portion 510 and the joint housing seat 41.

According to an embodiment of the invention, the support and housing base 4 comprises an abutment surface 43 for abutting with an underlying surface 519 of the head 511, wherein a second sealing seat 430 is provided where a second fluid-tight gasket 431, e.g. an O-ring, is removably housed to form the seal between the head 511 and the support and housing base 4. In particular, the abutment surface 43 is raised and delimits the joint housing seat 41 circumferentially at the top.

According to an embodiment not shown in the figure, a second sealing seat is formed in an underlying surface 519 of the head 511, wherein a second fluid-tight gasket, e.g. an O-ring, is removably housed to form the seal between the head 511 and the support and housing base 4.

According to an embodiment, the sealing joint 5 is made in one piece. In other words, the base engagement element 51 is integral with the connecting nipple 52.

In a general embodiment, the hydrostatic acceptance system 10 is suitable to test the hydrostatic pressure resistance of a tank and comprises a support and connection structure 1, a tank 2, a low-pressure pump 11, a high-pressure pump 11', a flow rate sensor 13, a pressure sensor 15, a data regulating and acquisition group 16, at least one deformation measuring device 18, and a fluid source 19.

The tank 2 is operationally connected to the support and connection structure 1.

The low-pressure pump 11 is suitable to pump the test fluid to fill both the tank 2 and the gap 60. Specifically, the low-pressure pump 11 regulates the inflow of the test fluid until the pressure of the test fluid in the tank 2 and the gap 60 is equal to the atmospheric pressure.

The high-pressure pump 11' is suitable to pressurize the tank 2. For example, the high-pressure pump 11' allows the test fluid to reach a pressure of 1.5 times the rated tank pressure.

Both the low-pressure pump 11 and the high-pressure pump 11' draw test fluid from the fluid source 19.

The fluid source 19 not only allows for the test fluid to be drawn during tank filling and pressurization; it also receives the discharged test fluid during tank depressurization and emptying.

For the purposes of this discussion, this is referred to as "tank filling" as long as the test fluid is at atmospheric pressure. The term "tank pressurization" is instead used when the test fluid is pressurized to a value of 1.5 times the rated tank pressure. For example, the test fluid may be pressurized up to 1050 bar.

Similarly, "tank depressurization" occurs when the test fluid is discharged to the outside of the tank until the test fluid inside the tank returns to atmospheric pressure. On the other hand, "tank emptying" refers to the test fluid being drained, i.e., discharged to the outside at atmospheric pressure.

The flow rate sensor 13, such as a liter counter, is positioned along the feed line 3, preferably in proximity to the connecting pipe 42 so as to measure the amount of test fluid entering and leaving the tank 2.

Optionally, the hydrostatic acceptance system 10 also comprises a degassing cap suitable to evacuate air from the tank 2.

The pressure sensor 15, for example a pressure gauge, is suitable for measuring the pressure of the test fluid within the tank 2. Specifically, the pressure sensor 15 allows for measuring that the test fluid reaches the predetermined pressure value for the acceptance test, for example a value 1.5 times the rated pressure of the tank.

The data regulating and acquisition group 16, such as a PLC, is suitable for acquiring and storing the test data, for example number of liters of test fluid used, pressure, and temperature of the test fluid. Said data regulating and acquisition group 16 is configured to adjust the pressure value of the test fluid when the pressure sensor 15 detects a value that is outside the predetermined pressure range for testing.

The at least one deformation measuring device 18, such as a graduated cylinder or an expansion cylinder, is operationally attached to the outer wall of the outer sealing frame 6 and allows the deformation of the tank to be measured during the hydrostatic acceptance test. Obtaining the measurement value, with the elastic deformation value filtered out, allows the residual plastic deformation value of the tank to be obtained.

The method for performing the hydrostatic acceptance test envisages the following steps:
- filling the tank 2 and the gap 60 at atmospheric pressure by means of the low-pressure pump 11 drawing test fluid from the fluid source 19;
- pressurizing the tank by means of the high-pressure pump 11' which draws test fluid from the fluid source 19;
- checking the pressure value of the test fluid by means of the pressure sensor 15;
- adjusting of the test fluid pressure value by means of the data regulating and acquisition group 16;
- acquiring and storing the test data by the data regulating and acquisition group 16;
- measuring the tank deformation during the hydrostatic acceptance test by means of the at least one deformation measuring device 18;
- depressurizing and emptying the tank;
- measuring the residual plastic deformation, obtained by subtracting from the value of the tank deformation, measured by the deformation measuring device 18, the elastic deformation that causes the initial discharge of water from the gap following pressurization of the test fluid in the tank.

In one embodiment of the method, it is also possible to obtain a measurement of residual plastic deformation through the flow rate sensor 13. Specifically, the flow rate sensor 13 measures the amount of test fluid used to bring the tank from the atmospheric pressure to the test pressure, i.e. 1.5 times the nominal tank pressure. In addition, such a flow rate sensor 13 also measures the amount of test fluid for depressurizing the tank, i.e. the amount of fluid that is discharged to bring the tank back to atmospheric pressure. The difference between the amount of test fluid for pressurizing the tank and the amount of test fluid for depressurizing the tank is proportional to the residual plastic deformation.

Advantageously, a dual check for the measurement of the residual plastic deformation is possible. Such dual check is accomplished with the deformation measuring device 18 and the flow rate sensor 13.

It will appear clear to the person skilled in the art that in the case wherein the amount of test fluid for pressurization is equal to the amount of test fluid for tank depressurization, then the residual plastic deformation is zero. If the amount of test fluid for pressurization is greater than the amount of test fluid for depressurization, permanent plastic deformation is produced on the tank.

A general method for operating the hydrostatic acceptance system provides for the connecting nipple to be engaged and made integral with the base engagement element so as to obtain the assembled sealing joint. This sealing joint is screwed into the threaded hole in the tank and then inserted into the joint housing seat.

The low-pressure pump 11 initiates the tank filling phase by drawing test fluid from the fluid source 19. Once the tank filling is complete, the tank pressurization phase begins wherein the high pressure-pump 11' draws the test fluid from the fluid source 19 until the maximum pressure value for performing the test is reached.

Once the test is complete, the tank depressurization phase begins, wherein the test fluid is discharged from the tank through a depressurization valve until the test fluid inside the tank returns to the atmospheric pressure.

This is followed by the tank emptying phase, wherein the test fluid at atmospheric pressure is discharged to the outside and returned to the fluid source 19.

Innovatively, the support and connection structure and the hydrostatic acceptance system fulfill the intended object. In particular, it is sufficient to insert the sealing joint, previously screwed to the tank, in the joint housing seat to ensure the seal. In other words, it is no longer necessary to screw the sealing joint to the feed line.

Advantageously, the support and connection structure allows the set-up of the hydrostatic acceptance test to be automated and sped up, because after screwing the sealing joint to the tank it is sufficient to place the joint in the respective joint housing seat to start the test. Therefore, screwing the sealing joint to the feed line is no longer required.

Advantageously, the support and connection structure is easily assembled, as the frustoconical centering portion allows for easy positioning of the sealing joint in the joint housing seat, which is counter-shaped with respect to the centering portion.

According to an advantageous aspect, the support and connection structure is easy to maintain, in effect the connecting nipple is easily replaceable without the complete replacement of the sealing joint. In particular, the second end of the nipple, which screws into the threaded hole of the tank, is the part that tends to wear the most, so it is possible to replace only the connecting nipple and keep the base engagement element.

In an even further advantageous aspect, the hydrostatic acceptance system allows a more precise and reliable measurement of the residual plastic deformation, since this measurement is obtained by means of the deformation measuring device and is then checked by means of the data collected by the flow rate sensor. In other words, the hydrostatic testing system actually allows a dual check of the measured value of residual plastic deformation, and this dual check is carried out by means of the deformation measuring device and the flow rate sensor.

## Claims

1. A support and connection structure (1) suitable to support a tank (2) during a hydrostatic acceptance test and suitable to connect the tank to a feed line (3) of a test fluid, said structure comprising:
- a support and housing base (4) for the tank (2);
- a sealing joint (5) with an axial extension along an axis (G) and a circumferential extension perpendicularly to said axis (G), configured to connect the support and housing base (4) with the tank (2), a feeding conduit (50) axially passing through the fluidic connection between the feed line (3) and the inside of the tank being obtained in said sealing joint (5),
wherein the support and housing base (4) comprises a clamp (40) formed by at least one pair of jaws (40a, 40b) configured to pass from a disengaged position to a support position of the sealing joint (5) along said circumferential extension and of the tank (2) along said axis (G), a joint housing seat (41) and a connecting pipe (42) for the connection of the feed line (3) with the feeding conduit (50) also being obtained in the support and housing base (4),
wherein the sealing joint (5) comprises a base engagement element (51) sealingly engageable with the support and housing base (4), and a connecting nipple (52), the connecting nipple (52) extending between a first end (52') engageable in the nipple engagement hole (512), and a second end (52") at least partially externally threaded so it is engageable in a respective threaded hole (20) obtained in the tank (2),
the structure **characterized in that**
the base engagement element (51) comprising a centering portion (510) and a head (511) which surmounts said centering portion (510) in axial succession, wherein
i) the centering portion (510) is engageable in the joint housing seat (41) with shape and/or force coupling,
ii) the head (511) has a greater circumferential volume than the one of the centering portion (510), a nipple engagement hole (512) configured to engage the connecting nipple (52) also being obtained in the head.

2. A support and connection structure (1) according to claim 1, further comprising a toggle lever linkage (8) for operating the clamp (40), said toggle lever linkage (8) being provided with at least one pair of cylinders (80), wherein each cylinder of said pair of cylinders (80) moves a bracket (81), at the free end of which a first connecting rod (82a) and a second connecting rod (82b) are hinged, the first connecting rod (82a) at the end opposite to the one hinged to the bracket (81) being rotationally fastened to a rigid support (83),
the second connecting rod (82b) at the end opposite to the one hinged to the bracket (81) being rotationally fastened to a strut (84) which pushes on a respective jaw (40a; 40b) so as to induce the transverse locking of the sealing joint (5).

3. A support and connection structure (1) according to any one of the preceding claims, wherein the centering portion (510) is frustoconically-shaped along said axis (G) away from the tank, and the joint housing seat (41) is counter-shaped with respect to said centering portion.

4. A support and connection structure (1) according to any one of the preceding claims, wherein an overhead surface (513) of the head (511) has a tapered shape converging towards the axis (G) so that the overhead surface (513) forms, with an imaginary plane (I) orthogonal to the axis (G), a convex angle (α) with an amplitude between 2° and 15°, preferably between 3° and 10°, even more preferably exactly 5°.

5. A support and connection structure (1) according to any one of the preceding claims, wherein the base engagement element (51) further comprises a collar (514) protruding from the head (511) in direction opposite to the centering portion (510) and parallel to the axis (G), the nipple engagement hole (512) being at least partially obtained in said collar (514).

6. A support and connection structure (1) according to claims 4 and 5, wherein a groove (516) suitable to house a first fluid-tight element (517), e.g. a washer, is obtained in an upper collar surface (515) of the collar (514), where said first fluid-tight element (517) is axially compressed in the groove (516) by an intermediate gripping portion (520) when the first end (52') engages the nipple engagement hole (512), said intermediate gripping portion (520) being positioned between the first end (52') and the second end (52").

7. A support and connection structure (1) according to claim 5 or 6, wherein the intermediate gripping portion (520) has a greater transverse width than the one of the first (52') and the second (52") end so as to form a lower shoulder (521) and an upper shoulder (522), a second fluid-tight element (523) suitable to be interposed between the upper shoulder (522) and the tank (2) to prevent the test fluid from leaking from the tank during the hydrostatic acceptance test being positioned on said upper shoulder (522) .

8. A support and connection structure (1) according to any one of the preceding claims, wherein the joint housing seat (41) is delimited at the bottom by a bottom wall (410) wherein a first sealing seat (411) where there is removably housed a first fluid-tight gasket (412), e.g. an O-ring, is obtained to form the seal between the centering portion (510) and the joint housing seat (41).

9. A support and connection structure (1) according to any one of claims 1 to 7, wherein the centering portion (510) is delimited at the bottom by a base (518) wherein a first sealing seat (411') where there is removably housed a first fluid-tight gasket (412'), e.g. an O-ring, is obtained to form the seal between the centering portion (510) and the joint housing seat (41).

10. A support and connection structure (1) according to any one of the preceding claims, wherein the support and housing base (4) comprises an abutment surface (43) for abutting with an underlying surface (519) of the head (511), wherein a second sealing seat (430) where a second fluid-tight gasket (431), e.g. an O-ring, may be removably housed is obtained to form the seal between the head (511) and the support and housing base (4).

11. A support and connection structure (1) according to any one of claims 1 to 9, wherein a second sealing seat where a second fluid-tight gasket, e.g. an O-ring, may be removably housed is obtained in an underlying surface (519) of the head (511) to form the seal between the head (511) and the support and housing base (4).

12. A support and connection structure (1) according to any one of the preceding claims, wherein the sealing joint (5) is made in one piece.

13. A hydrostatic acceptance system (10) suitable to test the resistance to the hydrostatic pressure of a tank, comprising:
- a support and connection structure (1) according to any one of the preceding claims;
- a tank (2) operatively connected to the support and connection structure (1);
- a low-pressure pump (11) for pumping test fluid so as to fill both the tank (2) and a gap (60) defined between said tank and an outer sealing frame (6);
- - a high-pressure pump (11') for pumping the test fluid so as to pressurize the tank (2);
- a flow rate sensor (13), for example a liter gauge, positioned along the feed line (3), preferably close to the connecting pipe (42), so as to measure the quantity of test fluid inlet into and outlet from the tank (2);
- a pressure sensor (15), for example a pressure gauge, for measuring the pressure of the test fluid in the tank (2) ;
- a data regulating and acquisition group (16) for acquiring and storing test data, for example number of liters of test fluid used, pressure and temperature of the test fluid, said data regulating and acquisition group (16) being configured to regulate the pressure value of the test fluid when the pressure sensor (15) detects a value that is outside the predetermined pressure range for the test;
- at least one deformation measuring device (18), for example a graduated cylinder or an expansion cylinder, for measuring the deformation of the tank (2), said deformation measuring device (18) being operatively connected to the outer wall of the outer sealing frame (6);
- a source (19) of fluid configured to provide the test fluid in tank filling and pressurization step, and also to receive the test fluid discharged in tank depressurization and emptying step.

## Patentansprüche

1. Stütz- und Verbindungsstruktur (1), die geeignet ist, einen Tank (2) während eines hydrostatischen Annahmetests zu stützen, und geeignet ist, den Tank mit einer Zufuhrleitung (3) eines Testfluids zu verbinden, wobei die Struktur aufweist:
- eine Stütz- und Gehäusebasis (4) für den Tank (2);
- eine Dichtungsverbindung (5) mit einer axialen Erstreckung entlang einer Achse (G) und einer Umfangserstreckung senkrecht zu der Achse (G), die konfiguriert ist, die Stütz- und Gehäusebasis (4) mit dem Tank (2) zu verbinden, wobei ein Zufuhrkanal (50), der axial durch die Fluidverbindung zwischen der Zufuhrleitung (3) und dem Inneren des Tanks verläuft, in der Dichtungsverbindung (5) erhalten wird,
wobei die Stütz- und Gehäusebasis (4) eine Klemme (40) aufweist, die durch zumindest ein Paar Backen (40a, 40b) gebildet ist, die konfiguriert sind, von einer gelösten Position in eine Stützposition der Dichtungsverbindung (5) entlang der Umfangserstreckung und des Tanks (2) entlang der Achse (G) überzugehen, wobei ein Verbindungsgehäusesitz (41) und ein Verbindungsrohr (42) für die Verbindung der Zufuhrleitung (3) mit dem Zufuhrkanal (50) ebenfalls in der Stütz- und Gehäusebasis (4) erhalten werden,
wobei die Dichtungsverbindung (5) ein mit der Stütz- und Gehäusebasis (4) abdichtend in Eingriff bringbares Basiseingriffselement (51) und einen Verbindungsnippel (52) aufweist, wobei sich der Verbindungsnippel (52) zwischen einem ersten Ende (52'), das mit dem Nippeleingriffsloch (512) in Eingriff bringbar ist, und einem zweiten Ende (52") erstreckt, das zumindest teilweise mit einem Außengewinde versehen ist, sodass es in einem entsprechenden Gewindeloch (20) in Eingriff bringbar ist, das in dem Tank (2) erhalten wird, wobei die Struktur **dadurch gekennzeichnet ist, dass**
das Basiseingriffselement (51) einen Zentrierabschnitt (510) und einen Kopf (511) aufweist, der den Zentrierabschnitt (510) in axialer Folge überragt, wobei
i) der Zentrierabschnitt (510) form- und/oder kraftschlüssig in dem Verbindungsgehäusesitz (41) in Eingriff bringbar ist,
ii) der Kopf (511) ein größeres Umfangsvolumen aufweist als der Zentrierabschnitt (510), wobei ein Nippeleingriffsloch (512), das konfiguriert ist, mit dem Verbindungsnippel (52) in Eingriff zu stehen, ebenfalls in dem Kopf erhalten wird.

2. Stütz- und Verbindungsstruktur (1) nach Anspruch 1, ferner aufweisend ein Kniehebelgestänge (8) zur Betätigung der Klemme (40), wobei das Kniehebelgestänge (8) mit zumindest einem Paar Zylinder (80) versehen ist, wobei jeder Zylinder des Paars Zylinder (80) einen Bügel (81) bewegt, an dessen freiem Ende eine erste Pleuelstange (82a) und eine zweite Pleuelstange (82b) angelenkt sind,
wobei die erste Pleuelstange (82a) an dem Ende, das dem an dem Bügel (81) angelenkten gegenüberliegt, an einem starren Träger (83) drehbar befestigt ist,
wobei die zweite Pleuelstange (82b) an dem Ende, das dem an dem Bügel (81) angelenkten gegenüberliegt, an einer Strebe (84) drehbar befestigt ist, die auf eine jeweilige Backe (40a; 40b) drückt, um die Querverriegelung der Dichtungsverbindung (5) zu bewirken.

3. Stütz- und Verbindungsstruktur (1) nach einem der vorhergehenden Ansprüche, wobei der Zentrierabschnitt (510) entlang der Achse (G) von dem Tank weg kegelstumpfförmig ist und der Verbindungsgehäusesitz (41) in Bezug auf den Zentrierabschnitt gegengeformt ist.

4. Stütz- und Verbindungsstruktur (1) nach einem der vorhergehenden Ansprüche, wobei eine obere Kopffläche (513) des Kopfs (511) eine verjüngte Form aufweist, die zu der Achse (G) hin konvergiert, sodass die obere Kopffläche (513) mit einer imaginären Ebene (I), die orthogonal zu der Achse (G) liegt, einen konvexen Winkel (α) mit einer Amplitude zwischen 2° und 15°, bevorzugt zwischen 3° und 10°, besonders bevorzugt genau 5° bildet.

5. Stütz- und Verbindungsstruktur (1) nach einem der vorhergehenden Ansprüche, wobei das Basiseingriffselement (51) ferner einen Kragen (514) aufweist, der von dem Kopf (511) in entgegengesetzter Richtung zu dem Zentrierabschnitt (510) und parallel zu der Achse (G) vorspringt, wobei das Nippeleingriffsloch (512) zumindest teilweise in dem Kragen (514) erhalten wird.

6. Stütz- und Verbindungsstruktur (1) nach den Ansprüchen 4 und 5, wobei eine Nut (516), die geeignet ist, ein erstes fluiddichtes Element (517), z.B. eine Unterlegscheibe, aufzunehmen, in einer oberen Kragenfläche (515) des Kragens (514) erhalten wird, wobei das erste fluiddichte Element (517) in der Nut (516) durch einen Zwischengreifabschnitt (520) axial zusammengedrückt wird, wenn das erste Ende (52') mit dem Nippeleingriffsloch (512) in Eingriff steht, wobei der Zwischengreifabschnitt (520) zwischen dem ersten Ende (52') und dem zweiten Ende (52'') positioniert ist.

7. Stütz- und Verbindungsstruktur (1) nach Anspruch 5 oder 6, wobei der Zwischengreifabschnitt (520) eine größere Querbreite aufweist als das erste (52') oder das zweite (52") Ende, um eine untere Schulter (521) und eine obere Schulter (522) zu bilden, wobei ein zweites fluiddichtes Element (523), das geeignet ist, zwischen der oberen Schulter (522) und dem Tank (2) angeordnet zu sein, um zu verhindern, dass das Testfluid während des hydrostatischen Annahmetests aus dem Tank ausläuft, auf der oberen Schulter (522) positioniert ist.

8. Stütz- und Verbindungsstruktur (1) nach einem der vorhergehenden Ansprüche, wobei der Verbindungsgehäusesitz (41) am Boden durch eine Bodenwand (410) begrenzt ist, wobei ein erster Dichtungssitz (411), in dem eine erste fluiddichte Dichtung (412), z.B. ein O-Ring, abnehmbar aufgenommen ist, erhalten wird, um die Dichtung zwischen dem Zentrierabschnitt (510) und dem Verbindungsgehäusesitz (41) zu bilden.

9. Stütz- und Verbindungsstruktur (1) nach einem der Ansprüche 1 bis 7, wobei der Zentrierabschnitt (510) am Boden durch eine Basis (518) begrenzt ist, wobei ein erster Dichtungssitz (411'), in dem eine erste fluiddichte Dichtung (412'), z.B. ein O-Ring, abnehmbar aufgenommen ist, erhalten wird, um die Dichtung zwischen dem Zentrierabschnitt (510) und dem Verbindungsgehäusesitz (41) zu bilden.

10. Stütz- und Verbindungsstruktur (1) nach einem der vorhergehenden Ansprüche, wobei die Stütz- und Gehäusebasis (4) eine Anlagefläche (43) zur Anlage an eine untenliegende Fläche (519) des Kopfs (511) aufweist, wobei ein zweiter Dichtungssitz (430), in dem eine zweite fluiddichte Dichtung (431), z.B. ein O-Ring, abnehmbar aufgenommen werden kann, erhalten wird, um die Dichtung zwischen dem Kopf (511) und der Stütz- und Gehäusebasis (4) zu bilden.

11. Stütz- und Verbindungsstruktur (1) nach einem der Ansprüche 1 bis 9, wobei ein zweiter Dichtungssitz, in dem eine zweite fluiddichte Dichtung, z.B. ein O-Ring, abnehmbar aufgenommen werden kann, in einer untenliegenden Fläche (519) des Kopfs (511) erhalten wird, um die Dichtung zwischen dem Kopf (511) und der Stütz- und Gehäusebasis (4) zu bilden.

12. Stütz- und Verbindungsstruktur (1) nach einem der vorhergehenden Ansprüche, wobei die Dichtungsverbindung (5) einstückig hergestellt ist.

13. Hydrostatisches Annahmesystem (10), das geeignet ist, die Widerstandsfähigkeit eines Tanks gegen den hydrostatischen Druck zu testen, aufweisend:
- eine Stütz- und Verbindungsstruktur (1) nach einem der vorhergehenden Ansprüche;
- einen Tank (2), der mit der Stütz- und Verbindungsstruktur (1) betriebswirksam verbunden ist;
- eine Niederdruckpumpe (11) zum Pumpen von Testfluid, um sowohl den Tank (2) als auch einen zwischen dem Tank und einem äußeren Dichtungsrahmen (6) definierten Spalt (60) zu füllen;
- eine Hochdruckpumpe (11') zum Pumpen des Testfluids, um den Tank (2) mit Druck zu beaufschlagen;
- einen Strömungsratensensor (13), zum Beispiel einen Literzähler, der entlang der Zufuhrleitung (3), bevorzugt nahe an dem Verbindungsrohr (42), positioniert ist, um die Menge an in den bzw. aus dem Tank (2) eintretendem und austretendem Testfluid zu messen;
- einen Drucksensor (15), z.B. ein Druckmessgerät, zur Messung des Drucks des Testfluids in dem Tank (2);
- eine Datenregulierungs- und -erfassungsgruppe (16) zum Erfassen und Speichern von Testdaten, zum Beispiel Anzahl der Liter von verwendetem Testfluid, Druck und Temperatur des Testfluids, wobei die Datenregulierungs- und -erfassungsgruppe (16) konfiguriert ist, den Druckwert des Testfluids zu regeln, wenn der Drucksensor (15) einen Wert detektiert, der außerhalb des vorbestimmten Druckbereichs für den Test liegt;
- zumindest eine Verformungsmessvorrichtung (18), zum Beispiel ein Messzylinder oder ein Expansionszylinder, zur Messung der Verformung des Tanks (2), wobei die Verformungsmessvorrichtung (18) mit der Außenwand des äußeren Dichtungsrahmens (6) betriebswirksam verbunden ist;
- eine Quelle (19) von Fluid, die konfiguriert ist, das Testfluid in dem Schritt des Befüllens und Druckbeaufschlagens des Tanks bereitzustellen und zudem das in dem Schritt des Druckentlastens und Entleerens des Tanks abgegebene Testfluid aufzunehmen.

## Revendications

1. Structure de support et de raccordement (1) appropriée pour supporter un réservoir (2) au cours d'un test d'acceptation hydrostatique et appropriée pour raccorder le réservoir à une conduite d'alimentation (3) d'un fluide de test, ladite structure comprenant :
- une base de support et de logement (4) pour le réservoir (2) ;
- un joint d'étanchéité (5) doté d'une extension axiale le long d'un axe (G) et d'une extension circonférentielle perpendiculairement audit axe (G), configuré pour raccorder la base de support et de logement (4) au réservoir (2), une conduite d'alimentation (50) traversant axialement le raccordement fluidique entre la conduite d'alimentation (3) et l'intérieur du réservoir étant obtenue dans ledit joint d'étanchéité (5), dans laquelle la base de support et de logement (4) comprend une bride (40) constituée d'au moins une paire de mâchoires (40a, 40b) configurée pour passer d'une position désengagée à une position de support du joint d'étanchéité (5) le long de ladite extension circonférentielle et du réservoir (2) le long dudit axe (G), un siège de logement de joint (41) et un tuyau de raccordement (42) pour le raccordement de la conduite d'alimentation (3) avec la conduite d'alimentation (50) étant également obtenus dans la base de support et de logement (4),
dans laquelle le joint d'étanchéité (5) comprend un élément de mise en prise de base (51) pouvant être mis en prise de façon étanche avec la base de support et de logement (4), et un mamelon de raccordement (52), le mamelon de raccordement (52) s'étendant entre une première extrémité (52') pouvant être mise en prise dans le trou de mise en prise de mamelon (512), et une deuxième extrémité (52") au moins partiellement filetée à l'extérieur de sorte qu'elle puisse être mise en prise dans un trou taraudé (20) respectif obtenu dans le réservoir (2), la structure étant **caractérisée en ce que**
l'élément de mise en prise de base (51) comprend une partie de centrage (510) et une tête (511) qui surmonte ladite partie de centrage (510) dans une succession axiale, dans laquelle
i) la partie de centrage (510) peut être mise en prise dans le siège de logement de joint (41) avec un couplage de forme et/ou de force,
ii) la tête (511) a un volume circonférentiel supérieur par rapport à celui de la partie de centrage (510), un trou de mise en prise de mamelon (512) configuré pour mettre en prise le mamelon de raccordement (52) étant également obtenu dans la tête.

2. Structure de support et de raccordement (1) selon la revendication 1, comprenant en outre une tringlerie de levier à genouillère (8) pour actionner la bride (40), ladite tringlerie de levier à genouillère (8) étant dotée d'au moins une paire de cylindres (80), dans laquelle chaque cylindre de ladite paire de cylindres (80) déplace un support (81), à l'extrémité libre duquel une première bielle (82a) et une deuxième bielle (82b) sont articulées,
la première bielle (82a) à l'extrémité opposée à celle articulée au support (81) étant fixée en rotation à un support rigide (83),
la deuxième bielle (82b) à l'extrémité opposée à celle articulée au support (81) étant fixée en rotation à une plaquette (84) qui pousse sur une mâchoire (40a ; 40b) respective de manière à induire le verrouillage transversal du joint d'étanchéité (5).

3. Structure de support et de raccordement (1) selon l'une quelconque des revendications précédentes, dans laquelle la partie de centrage (510) est de forme tronconique le long dudit axe (G) à distance du réservoir, et le siège de logement de joint (41) est de forme contraire par rapport à ladite partie de centrage.

4. Structure de support et de raccordement (1) selon l'une quelconque des revendications précédentes, dans laquelle une surface suspendue (513) de la tête (511) a une forme tronconique convergeant vers l'axe (G) de telle sorte que la surface suspendue (513) forme, avec un plan imaginaire (I) orthogonal à l'axe (G), un angle convexe (α) avec une amplitude entre 2° et 15°, de préférence entre 3° et 10°, de préférence encore exactement de 5°.

5. Structure de support et de raccordement (1) selon l'une quelconque des revendications précédentes, dans laquelle l'élément de mise en prise de base (51) comprend en outre un collier (514) faisant saillie à partir de la tête (511) dans la direction opposée à la partie de centrage (510) et parallèle à l'axe (G), le trou de mise en prise de mamelon (512) étant au moins partiellement obtenu dans ledit collier (514).

6. Structure de support et de raccordement (1) selon les revendications 4 et 5, dans laquelle une rainure (516) appropriée pour loger un premier élément étanche aux fluides (517), par exemple une rondelle, est obtenue dans une surface de collier supérieure (515) du collier (514), où ledit premier élément étanche aux fluides (517) est axialement comprimé dans la rainure (516) par une partie de serrage intermédiaire (520) lorsque la première extrémité (52') met en prise le trou de mise en prise de mamelon (512), ladite partie de serrage intermédiaire (520) étant positionnée entre la première extrémité (52') et la deuxième extrémité (52").

7. Structure de support et de raccordement (1) selon la revendication 5 ou 6, dans laquelle la partie de serrage intermédiaire (520) a une largeur transversale supérieure par rapport à celle des première (52') et deuxième (52") extrémités de manière à former un épaulement inférieur (521) et un épaulement supérieur (522), un deuxième élément étanche aux fluides (523) approprié pour être intercalé entre l'épaulement supérieur (522) et le réservoir (2) afin d'empêcher que le fluide de test ne fuit à partir du réservoir au cours du test d'acceptation hydrostatique étant positionné sur ledit épaulement supérieur (522).

8. Structure de support et de raccordement (1) selon l'une quelconque des revendications précédentes, dans laquelle le siège de logement de joint (41) est délimité au fond par une paroi de fond (410) dans laquelle un premier siège d'étanchéité (411) où se trouve logé de façon amovible un premier joint d'étanchéité étanche aux fluides (412), par exemple un joint torique, est obtenu pour former le joint d'étanchéité entre la partie de centrage (510) et le siège de logement de joint (41).

9. Structure de support et de raccordement (1) selon l'une quelconque des revendications 1 à 7, dans laquelle la partie de centrage (510) est délimitée au fond par une base (518) dans laquelle un premier siège d'étanchéité (411') où se trouve logé de façon amovible un premier joint d'étanchéité étanche aux fluides (412'), par exemple un joint torique, est obtenu pour former le joint d'étanchéité entre la partie de centrage (510) et le siège de logement de joint (41).

10. Structure de support et de raccordement (1) selon l'une quelconque des revendications précédentes, dans laquelle la base de support et de logement (4) comprend une surface de butée (43) pour venir en butée avec une surface sous-jacente (519) de la tête (511), dans laquelle un deuxième siège d'étanchéité (430) où un deuxième joint d'étanchéité étanche aux fluides (431), par exemple un joint torique, peut être logé de façon amovible, est obtenu pour former le joint d'étanchéité entre la tête (511) et la base de support et de logement (4).

11. Structure de support et de raccordement (1) selon l'une quelconque des revendications 1 à 9, dans laquelle un deuxième siège d'étanchéité où un deuxième joint d'étanchéité étanche aux fluides, par exemple un joint torique, peut être logé de façon amovible, est obtenu dans une surface sous-jacente (519) de la tête (511) pour former le joint d'étanchéité entre la tête (511) et la base de support et de logement (4).

12. Structure de support et de raccordement (1) selon l'une quelconque des revendications précédentes, dans laquelle le joint d'étanchéité (5) est fabriqué d'un seul tenant.

13. Système d'acceptation hydrostatique (10) approprié pour tester la résistance de la pression hydrostatique d'un réservoir, comprenant :
- une structure de support et de raccordement (1) selon l'une quelconque des revendications précédentes ;
- un réservoir (2) raccordé de manière fonctionnelle à la structure de support et de raccordement (1) ;
- une pompe basse pression (11) pour pomper le fluide de test de manière à remplir à la fois le réservoir (2) et un espace (60) défini entre ledit réservoir et un cadre d'étanchéité externe (6) ;
- une pompe haute pression (11') pour pomper le fluide de test de manière à mettre sous pression le réservoir (2) ;
- un débitmètre (13), par exemple une jauge de litre, positionné le long de la conduite d'alimentation (3), de préférence à proximité du tuyau de raccordement (42), de manière à mesurer la quantité d'entrée de fluide de test dans le réservoir (2) et de sortie de fluide de test depuis le réservoir (2) ;
- un capteur de pression (15), par exemple un manomètre, pour mesurer la pression du fluide de test dans le réservoir (2) ;
- un groupe de régulation et d'acquisition de données (16) pour acquérir et stocker des données de test, par exemple le nombre de litres de fluide de test utilisés, la pression et la température du fluide de test, ledit groupe de régulation et d'acquisition de données (16) étant configuré pour réguler la valeur de pression du fluide de test lorsque le capteur de pression (15) détecte une valeur qui se trouve en dehors de la plage de pression prédéterminée pour le test ;
- au moins un dispositif de mesure de déformation (18), par exemple un cylindre gradué ou un vase d'expansion, pour mesurer la déformation du réservoir (2), ledit dispositif de mesure de déformation (18) étant raccordé de manière fonctionnelle à la paroi externe du cadre d'étanchéité externe (6) ;
- une source (19) de fluide configurée pour fournir le fluide de test au cours de l'étape de remplissage et mise sous pression du réservoir, et également pour recevoir le fluide de test évacué au cours de l'étape de dépressurisation et de vidange du réservoir.
